# EUROPÄISCHE PATENTANMELDUNG

(11) **EP 0 803 387 A2**
(43) Veröffentlichungstag der Anmeldung: **29.10.1997**
(21) Anmeldenummer: 97103933.4
(22) Anmeldetag: 10.03.1997
(51) Int. Cl.: B60H 1/00, B60H 3/06

(54) **Heizungs- und/oder Klimaanlage für einen Nutzkraftwagen**

(30) Priorität: 25.04.1996 DE 19616436
(71) Anmelder: DAIMLER-BENZ AKTIENGESELLSCHAFT, 70567 Stuttgart (DE)
(72) Erfinder: Böttcher, Erich, 71139 Ehningen (DE)

(57) **Zusammenfassung**

Für Heizungs- und/oder Klimaanlagen ist es bekannt, eine Frischluftansaugung vorzusehen, die mit wenigstens einem Luftfilter versehen ist.

Erfindungsgemäß ist für die Frischluftansaugung ein geschlossenes Ansauggehäuse (4) vorgesehen, das einen an eine Öffnung in der Karosserieaußenhaut angeschlossenen Ansaugstutzen aufweist, und das einen Aufnahmeschacht (22) für den Filter (12) aufweist, wobei das Ansauggehäuse (4) im Bereich des Aufnahmeschachtes (22) mit einer lösbaren Abdeckung (11) versehen ist, die Halterippen (20) aufweist, die den Filter (12) bei geschlossener Abdeckung im Aufnahmeschacht (22) festlegen.

Einsatz bei Lastkraftwagen.

## Beschreibung

Die Erfindung betrifft eine Heizungs- und/oder Klimaanlage für einen Nutzkraftwagen, insbesondere einen Lastkraftwagen, mit einer Frischluftansaugung sowie mit wenigstens einem der Frischluftansaugung zugeordneten, auswechselbaren Filter.

Heizungs- und/oder Klimaanlagen für Kraftfahrzeuge und insbesondere auch für Nutzkraftfahrzeuge sind allgemein bekannt. Derartige Heizungs- oder Klimaanlagen weisen eine Frischluftansaugung auf, die Frischluft aus der Umgebung ansaugt und in die Fahrzeugkabine weiterleitet. Um zu verhindern, daß Schmutzpartikel oder Schadstoffe in die Fahrzeugkabine geleitet werden, ist der Frischluftansaugung ein Filter zugeordnet.

Aus der DE 40 01 148 A1, die im Oberbegriff des Anspruches 1 berücksichtigt ist, ist eine Belüftungseinrichtung für eine Fahrzeugkabine bekannt, die eine Frischluftansaugung von außen und einen auswechselbaren Luftfilter aufweist. Das Filterelement ist in einem Filtergehäuse festgelegt.

Aufgabe der Erfindung ist es, eine Heizungs- und/oder Klimaanlage der eingangs genannten Art zu schaffen, die eine verbesserte, wartungsfreundliche Frischluftansaugung aufweist.

Diese Aufgabe wird dadurch gelöst, daß für die Frischluftansaugung ein geschlossenes Ansauggehäuse vorgesehen ist, das einen an eine Öffnung in der Karosserieaußenhaut angeschlossenen Ansaugstutzen und einen Aufnahmeschacht zum Einsetzen des Filters aufweist, wobei das Ansauggehäuse im Bereich des Aufnahmeschachtes mit einer lösbaren Abdeckung versehen ist, die zum Filter hin abragende Halterippen aufweist, die den Filter bei geschlossener Abdeckung im Aufnahmeschacht festlegen. Durch das geschlossene Ansauggehäuse wird ein Ansaugkanal mit einem hohen Wirkungsgrad geschaffen, da keine Fehlluft eingezogen werden kann. Die geschlossene Ausführung gewährleistet zudem eine einfache Herstellbarkeit und Montierbarkeit der Frischluftansaugung. Die lösbare Abdeckung erfüllt eine Doppelfunktion, indem sie mit ihren Halterippen zum einen den Filter im Aufnahmeschacht fixiert, und zum anderen ein einfaches Auswechseln des Filters sowie eine einfache Zugänglichkeit ins Innere des Ansauggehäuses gewährleistet. Dadurch, daß der Ansaugstutzen direkt an eine Öffnung in der Karosserisaußenhaut anschließt, wird gewährleistet, daß kalte Umgebungsluft angesaugt wird. Würde die Umgebungsluft im Bereich des Motorraumes angesaugt werden, so würde in unerwünschter Weise bereits erwärmte Luft in die Fahrzeugkabine gelangen. In diesem Fall hätte ebenfalls die Motorluftansaugung, deren Ansaugöffnung sich auch im Motorraum hiner der Wartungsklappe befindet und somit in diesem Bereich die Druckverhältnisse bestimmt, negativen Einfluß auf die Frischluftansaugung der Heizung. Vorteilhaft wird der Filter in dem Aufnahmeschacht bereits klemmend aufgenommen, so daß die Halterippen lediglich eine zusätzliche Sicherung der eingeklemmten Position des Filters im Aufnahmeschacht darstellen und verhindern, daß sich der Filter aus dem Aufnahmeschacht löst.

In Ausgestaltung der Erfindung ist im Bereich des Ansaugstutzens eine Wasserabscheidung vorgesehen. Die Wasserabscheidung bewirkt, daß Wasser aus der Umgebungsluft, insbesondere Regen- oder Schmutzwasser, abgeleitet wird und so nicht im Ansauggehäuse der Frischluftansaugung weitertransportiert wird.

In weiterer Ausgestaltung der Erfindung ist der Ansaugstutzen - auf die Strömungsrichtung der Frischluft bezogen - unmittelbar hinter der Lufteinlaßöffnung mit mehreren, sich über den freien Strömungsquerschnitt des Ansaugstutzens erstreckenden und schräg nach unten gestellten Leitrippen versehen, entlang derer durch die Lufteinlaßöffnung eintretendes Wasser nach unten in einen strömungsberuhigten Bereich abgeleitet wird. Diese Leitrippen fungieren als Abtropfnasen, die verhindern, daß Wasser in die Frischluftansaugung gelangt. Vorteilhaft erstreckt sich das Ansauggehäuse vom Ansaugstutzen aus nach oben, so daß etwaige Wasserreste entlang der Wandungen des Ansauggehäuses nach unten ablaufen können, ohne in den Filter oder in übrige Bereiche der Heizungs- oder Klimaanlage zu gelangen.

In weiterer Ausgestaltung der Erfindung ist der strömungsberuhigte Bereich wannenartig ausgebildet und geht zur Karosserieaußenhaut hin in einen zur Fahrzeugaußenseite führenden Ableitbereich des Ansaugstutzens über. Dadurch wird gewährleistet, daß Regen- oder Schmutzwasser bereits kurz nach dem Eintritt in den Ansaugstutzen wieder nach außen abgeleitet wird.

In weiterer Ausgestaltung der Erfindung ist die Lufteinlaßöffnung an der Karosserieaußenhaut an der Fahrzeugfront vorgesehen und dem Fahrtwind entgegengerichtet. Durch diese erfindungsgemäße Anordnung der Lufteinlaßöffnung entsteht während der Fahrt des Nutzkraftwagens ein Staudruck im Bereich des Ansaugstutzens, wodurch gegebenenfalls die Leistung des Heizungsgebläses der Heizungs- und/oder Klimaanlage herabsetzbar ist.

In weiterer Ausgestaltung der Erfindung ist die Abdeckung als Außenhautkarosserieteil, insbesondere als Wartungsklappe, ausgebildet. Dadurch wird ein Bauteil eingespart, da das Außenhautkarosserieteil gleichzeitig auch die Abdeckung des Ansauggehäuses und damit auch die Fixierung des Filters im Aufnahmeschacht übernimmt.

In weiterer Ausgestaltung der Erfindung ist die Abdeckung mit Hilfe von Schnellverschlüssen an dem Gehäusekasten festlegbar. Dadurch wird die Bedienung der Abdeckung und damit auch die Wartung der Frischluftansaugung weiter vereinfacht.

In weiterer Ausgestaltung der Erfindung ist der Außenmantel des Ansaugstutzens wenigstens in seinem oberen Bereich mit Luftleitflächen versehen. Diese Ausführung ist von Vorteil, wenn der Ansaugstutzen teilweise vor den Kühler des Antriebsmotors ragt und so eine vollständige Umströmung des Kühlers durch Fahrtluft verhindert. Durch die Luftleitflächen wird eine gezielte Anströmung des Kühlers auch in dem Bereich erzielt, der im Windschatten des Ansaugstutzens liegt.

Weitere Vorteile und Merkmale der Erfindung ergeben sich aus den Unteransprüchen sowie aus der nachfolgenden zeichnerischen Darstellung und Beschreibung bevorzugter Ausführungsbeispiele der Erfindung.
- Fig. 1: zeigt schematisch einen Längsschnitt durch eine Fahrzeugfront eines Lastkraftwagens, der mit einer Ausführungsform einer erfindungsgemäßen Heizungs- und/oder Klimaanlage versehen ist,
- Fig. 2: das Ansauggehäuse der Frischluftansaugung für die Heizungs- und/oder Klimaanlage nach Fig. 1 im zusammengebauten Zustand und
- Fig. 3: die Frischluftansaugung nach Fig. 2 in einer perspektivischen Explosionsdarstellung.

Ein Lastkraftwagen weist ein Fahrerhaus mit einer steil abfallenden Front (1) auf. Die Fahrzeugfront (1) weist unterhalb einer nicht dargestellten Windschutzscheibe eine Wartungsklappe (7) auf, die ein Außenhaut-Karosserieteil darstellt. Die Wartungsklappe (7) ist in der lediglich angedeuteten Fahrerhauskarosserie (2) integriert. Unterhalb der Wartungsklappe (7) definiert die Fahrerhauskarosserie (2) eine nachfolgend näher beschriebene Lufteinlaßöffnung (8), die durch ein Firmenemblem (6), beim dargestellten Ausführungsbeispiel durch einen Mercedes-Stern, überdeckt ist. Das Firmenemblem (6) verschließt die Lufteinlaßöffnung (8) nicht, sondern deckt sie lediglich teilweise ab. Über die Lufteinlaßöffnung (8) ist in nicht dargestellter Weise ein engmaschiges Gitter gespannt, das beim dargestellten Ausführungsbeispiel mit dem Rahmen des Firmenemblems (6) verbunden ist. Unterhalb der Lufteinlaßöffnung (8) ist in der Fahrerhauskarosserie (2) in nicht dargestellter Weise ein Kühlereinlaß vorgesehen, der durch einen Kühlergrill abgedeckt ist. Durch diesen Kühlereinlaß strömt Fahrtwind in den Motorraum und umströmt einen Kondensator (5) eines Motorkühlers.

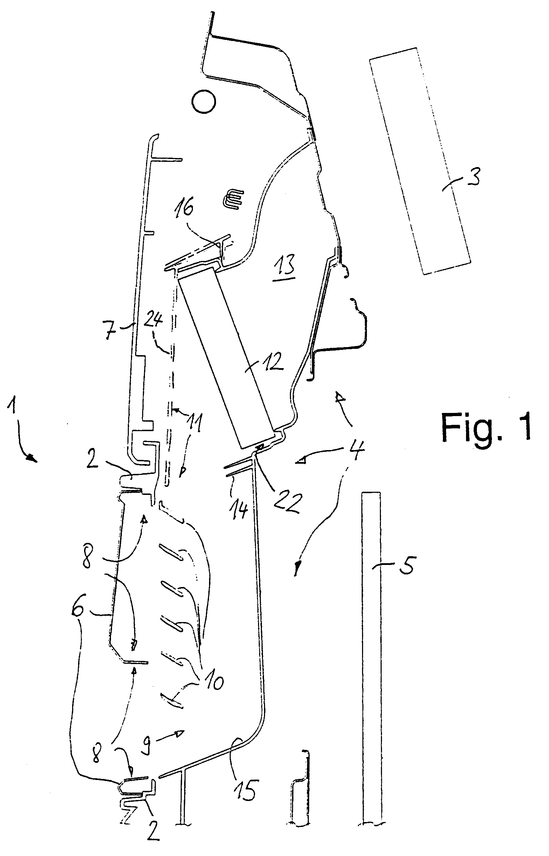

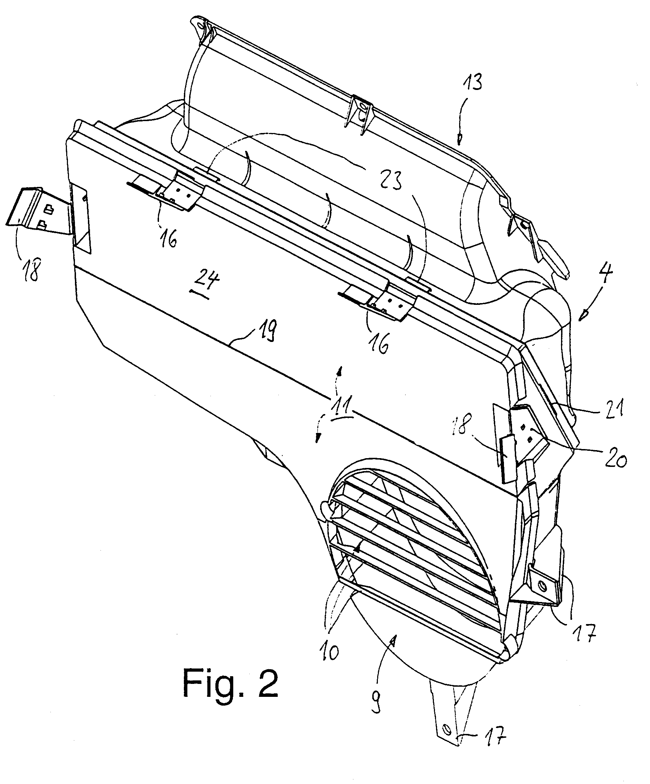

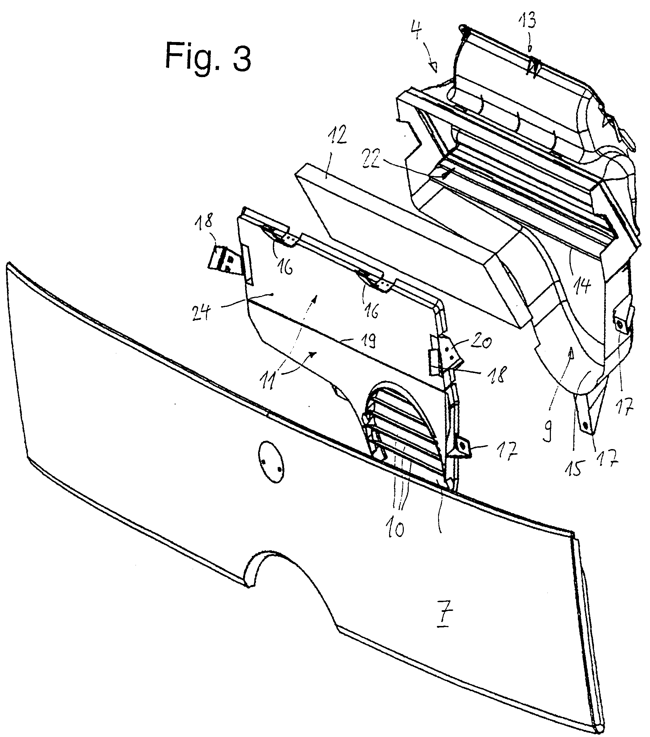

In Abstand hinter der Fahrzeugfront (1) ist in dem Fahrerhaus eine Heizungs- und/oder Klimaanlage angeordnet, deren Funktionsteile lediglich durch einen Heizkörper (3) symbolisiert sind. Die Heizungs- und/oder Klimaanlage ist außerdem mit einer Frischluftansaugung versehen, die zwischen dem Lufteinlaß (8) an der Fahrzeugfront und einem nicht näher bezeichneten Verteilerraum vor dem Heizkörper (3) verläuft. Die Frischluftansaugung weist ein aus Kunststoff hergestelltes Ansauggehäuse (4) auf, das sich als geschlossenes Gehäuse zwischen dem Lufteinlaß (8) und dem Verteilerraum erstreckt. Das Ansauggehäuse (4) weist gemäß den Fig. 1 bis 3 eine halbschalenförmige, rückseitige Gehäusehälfte auf, in der ein Ansaugstutzen (9), ein Aufnahmeschacht (22) und ein Zuführkanal (13) zum Verteilerraum integriert sind. Auf dieses Rückteil des Ansauggehäuses (4) ist als Vorderteil eine vordere Gehäuseschale (11) aufsetzbar, die im wesentlichen plattenartig gestaltet ist und in ihrem Randbereich in nicht dargestellter Weise mit einer umlaufenden Dichtung versehen ist, mittels der sie dicht mit dem Rückteil des Ansauggehäuses (4) verbindbar ist.

Da die Lufteinlaßöffnung (8) mit dem Ansaugstutzen, aufgrund ihrer vertikalen Ausrichtung an der Fahrzeugfront (1), voll dem Fahrtwind entgegengerichtet ist, wird sich während der Fahrt des Lastkraftwagens im Bereich der Frischluftansaugung ein Staudruck ergeben, der unter Umständen eine Reduzierung der Ansaugleistung des Heizgebläses ermöglicht.

Der Rückteil des Ansauggehäuses (4) weist einen schalenförmigen Teil des Ansaugstutzens (9) auf Höhe der Lufteinlaßöffnung (8) auf und ist von dort aus etwa vertikal nach oben gezogen. Der Rückteil ist fahrerhausfest montiert. Vom Ansaugstutzen (9) aus, dessen Strömungsquerschnitt etwa dem freien Strömungsquerschnitt der Lufteinlaßöffnung (8) entspricht, erweitert sich das Ansauggehäuse (4) nach oben hin bis zu einem schräggestellten Aufnahmeschacht (22), der als rechteckiger Rahmen in dem Ansauggehäuse (4) ausgebildet ist. Der Aufnahmeschacht (22) dient zum Einsetzen eines Luftfilters (12), der als Aktivkohle-, als Grob- oder als Pollenfilter ausgebildet sein kann. An den Aufnahmeschacht (22) schließt der Zuführkanal (13) zum Verteilerraum hin an. Der Ansaugstutzen (9), der Aufnahmeschacht (22) und der Zuführkanal (13) bilden einen durchgehenden Strömungskanal, in den im Bereich des Aufnahmeschachtes (22) der Luftfilter (12) eingesetzt ist. Der Luftfilter (12) weist in nicht dargestellter Weise einen rechteckigen, kastenförmigen Rahmen auf, der klemmend in den Aufnahmeschacht (22) einsetzbar ist.

Auf den Rückteil des Ansauggehäuses (4) ist der plattenförmige Vorderteil (11) aufsetzbar, der in einen unteren Abdeckbereich und in einen oberen Deckel (24) unterteilt ist. Der Deckel (24) ist durch ein Filmscharnier (19) einstückig mit dem unteren Abdeckbereich verbunden und um die, durch das Filmscharnier (19) gebildete, horizontale Scharnierachse klappbar. Der Deckel (24) ist auf Höhe des Aufnahmeschachtes (22) vorgesehen und ist insbesondere für die Wartung des Luftfilters (12), d.h. zum Auswechseln des Luftfilters (12), vorgesehen.

Der Vorderteil (11) des Ansauggehäuses (4) ist in seinem unteren Abdeckbereich mit dem Rückteil an drei Befestigungspunkten (17), die an der Außenseite des Vorderteils (11) und des Rückteils vorgesehen sind, befestigbar. Dazu sind in nicht dargestellter Weise Schraubverbindungen vorgesehen. Um auch bei aufgesetztem Vorderteil (11) eine einfache Entnahme des Luftfilters (12) vornehmen zu können, ohne das gesamte Vorderteil (11) abnehmen zu müssen, ist der mittels des Filmscharniers (19) an dem unteren Abdeckbereich des Vorderteiles (11) angeordnete Deckel (24) mit Hilfe von Schnellverschlüssen (16, 18) an dem Rückteil des Ansauggehäuses (4) festlegbar. Die Schnellverschlüsse (16 und 18) sind als Rastlaschen ausgebildet, die entsprechende Rastnasen (21, 23) am Rückteil des Ansauggehäuses (4) im fixierten Zustand hintergreifen. Die Rastlaschen (16, 18) sind in einfacher Weise von Hand lösbar. Anschließend ist der Deckel (24) des Vorderteils (11) nach vorne aufklappbar.

Das Aufklappen des Deckels (24) des Vorderteils (11) nach vorne ist jedoch nur bei geöffneter Wartungsklappe (7) möglich. Bei einem nicht dargestellten Ausführungsbeispiel der Erfindung stellt die Wartungsklappe gleichzeitig auch den Deckel zur Abdeckung des Ansauggehäuses auf Höhe des Luftfilters dar, so daß ein zusätzlicher Deckel, wie er beim dargestellten Ausführungsbeispiel vorhanden ist, entfallen kann.

Um den Luftfilter (12) in seiner in Fig. 1 dargestellten Klemmposition im Aufnahmeschacht (22) während des Fahrbetriebs zu fixieren, sind an dem Deckel (24) des Vorderteiles (11) des Ansauggehäuses (4) zwei keilförmige Halterippen (20) vorgesehen, deren Anlagefläche derart abgeschrägt ist, daß sie im geschlossenen Zustand des Deckels (24) den jeweiligen Rand des Luftfilters (12) flächig gegen den Boden des Aufnahmeschachtes (22) drücken. Die beiden Halterippen (20) sind auf gegenüberliegenden Seiten des Deckels (24) vorgesehen und ragen als einstückig an dem Deckel (24) angeformte Elemente zu dem Filter hin nach hinten ab. Sie üben bei geschlossenem Deckel jeweils auf die gegenüberliegenden Seitenränder des Luftfilters (12) eine Druckkraft aus. Die Druckkraft kann jedoch relativ gering bemessen sein, da der Luftfilter (12) lediglich in seiner bereits geklemmten Position innerhalb des Aufnahmeschachtes (22) gesichert werden muß, ohne durch Vibrationen der Heizungs- und/oder Klimaanlage gelockert zu werden.

Der untere Abdeckbereich des Vorderteiles (11) bildet die Ansaugöffnung für den Ansaugstutzen (9), wobei die Ansaugöffnung an die Größe der Lufteinlaßöffnung (8) im Bereich des Firmenemblems (6) angepaßt ist. Sowohl die Lufteinlaßöffnung (8) als auch die Ansaugöffnung des Ansaugstutzens (9) weisen einen kreisförmigen Querschnitt auf. Nahezu über die gesamte Höhe der Ansaugöffnung ist diese mit mehreren, beim dargestellten Ausführungsbeispiel mit sechs Leitrippen (10) versehen, die horizontal in Abstand übereinander verlaufen und sich quer über den freien Strömungsquerschnitt der Ansaugöffnung erstrecken. Alle Leitrippen (10) sind parallel zueinander in Fahrzeuglängsrichtung schräg nach hinten und nach unten gerichtet und dienen als Abtropfnasen für durch den Fahrtwind hereinströmende Wassertropfen. An der Rückwandung des Ansaugstutzens (9) ist ein strömungsberuhigter, wannenartiger Bereich (15) geschaffen, der zur Lufteinlaßöffnung (8) hin schräg nach vorne und nach unten gerichtet ist. Über diesen strömungsberuhigten Bereich (15) kann in den Ansaugstutzen (9) gelangendes Wasser wieder nach außen fließen. An der Rückseite des Ansaugstutzens (9) ist knapp unterhalb des Aufnahmeschachtes (22) noch eine weitere Wasserabweiskante (14) vorgesehen, die ebenfalls dazu dient, Wassertropfen von der weiteren Durchströmung durch die Frischluftansaugung und insbesondere von der Durchströmung des Luftfilters (12) abzuhalten. Das Wasser kann somit unterhalb der Wasserabweiskante (14) an der rückseitigen, vertikalen Wandung des Ansaugstutzens (9) nach unten und über den strömungsberuhigten Bereich (15) wieder nach außen fließen.

Bei einem nicht dargestellten Ausführungsbeispiel wird zusätzlich der Tatsache Rechnung getragen, daß das Ansauggehäuse (4) im Bereich des Ansaugstutzens (9) den Kondensator (5) verdeckt, so daß dieser im Windschatten des Ansaugstutzens (9) liegt und in diesem mittleren Bereich nicht ausreichend mit der notwendigen Kühlluft umströmt wird. Um so den Wirkungsgrad der Motorkühlung nicht zu verringern, ist bei dem nicht dargestellten Ausführungsbeispiel an der Außenwandung des Ansaugstutzens (9) und damit im unteren Bereich des Ansauggehäuses (4) eine Luftleitanordnung in Form von spoilerartigen, bogenförmig um die Unterseite des Ansauggehäuses gekrümmten Luftleitflächen vorgesehen, die eine gezielte Luftführung auch zu den von dem Ansaugstutzen (9) verdeckten Bereichen des Kondensators (5) gewährleisten.

## Patentansprüche

1. Heizungs- und/oder Klimaanlage für einen Nutzkraftwagen, insbesondere einen Lastkraftwagen, mit einer Frischluftansaugung sowie mit wenigstens einem der Frischluftansaugung zugeordneten, auswechselbaren Filter, und einem geschlossenen Ansauggehäuse für die Frischluftansaugung, das einen an eine Öffnung in der Karosserieaußenhaut angeschlossenen Ansaugstutzen und einen Aufnahmeschacht zum Einsetzen des Filters aufweist,
**dadurch gekennzeichnet, daß**
das Ansauggehäuse (4) im Bereich des Aufnahmeschachtes (22) mit einer lösbaren Abdeckung (11) versehen ist, die zum Filter (12) hin abragende Halterippen (20) aufweist, die den Filter (12) bei geschlossener Abdeckung (11) im Aufnahmeschacht (22) festlegen.

2. Heizungs- und/oder Klimaanlage nach Anspruch 1,
**dadurch gekennzeichnet, daß**
im Bereich des Ansaugstutzens (9) eine Wasserabscheidung (10, 15) vorgesehen ist.

3. Heizungs- und/oder Klimaanlage nach Anspruch 1 oder 2,
**dadurch gekennzeichnet, daß**
der Ansaugstutzen (9) - auf die Strömungsrichtung bezogen - unmittelbar hinter der Lufteinlaßöffnung (8) mit mehreren, sich über den freien Strömungsquerschnitt des Ansaugstutzens (9) erstreckenden und schräg nach unten gestellten Leitrippen (10) versehen ist, entlang derer durch die Lufteinlaßöffnung (8) eintretendes Wasser nach unten in einen strömungsberuhigten Bereich (15) ableitbar ist.

4. Heizungs- und/oder Klimaanlage nach Anspruch 3,
**dadurch gekennzeichnet, daß**
der strömungsberuhigte Bereich (15) wannenartig ausgebildet ist und zur Karosserieaußenhaut hin in einen zur Fahrzeugaußenseite führenden Ableitbereich des Ansaugstutzens (9) übergeht.

5. Heizungs- und/oder Klimaanlage nach wenigstens einem der vorhergehenden Ansprüche,
**dadurch gekennzeichnet, daß**
die Lufteinlaßöffnung (8) an der Karosserieaußenhaut an der Fahrzeugfront (1) vorgesehen und dem Fahrtwind entgegengerichtet ist.

6. Heizungs- und/oder Klimaanlage nach Anspruch 5,
**dadurch gekennzeichnet, daß**
die Lufteinlaßöffnung (8) mit einem engmaschigen Gitter versehen ist.

7. Heizungs- und/oder Klimaanlage nach einem der vorhergehenden Ansprüche,
**dadurch gekennzeichnet, daß**
die Lufteinlaßöffnung (8) in der Karosserieaußenhaut für die Aufnahme eines Firmenemblems (6) geeignet dimensioniert ist, und daß der Ansaugstutzen (9) an die Dimensionierung der Lufteinlaßöffnung (8) angepaßt ist.

8. Heizungs- und/oder Klimaanlage nach Anspruch 1,
**dadurch gekennzeichnet, daß**
die Abdeckung als Außenhautkarosserieteil, insbesondere als Wartungsklappe ausgebildet ist.

9. Heizungs- und/oder Klimaanlage nach wenigstens einem der vorhergehenden Ansprüche,
**dadurch gekennzeichnet, daß**
die Abdeckung (11) mit Hilfe von Schnellverschlüssen (16, 18) an dem Gehäusekasten (4) festlegbar ist.

10. Heizungs- und/oder Klimaanlage nach Anspruch 9,
**dadurch gekennzeichnet, daß**
zwischen der Abdeckung (11) und dem Rand des Gehäusekastens (4) eine Dichtung vorgesehen ist.

11. Heizungs- und/oder Klimaanlage nach einem der vorhergehenden Ansprüche,
**dadurch gekennzeichnet, daß**
der Außenmantel des Ansaugstutzens wenigstens in seinem unteren Bereich mit Luftleitflächen versehen ist.
